# EUROPEAN PATENT SPECIFICATION

(11) **EP 4 129 124 B1**
(45) Date of publication and mention of the grant of the patent: **02.08.2023**
(21) Application number: 22198633.4
(22) Date of filing: 07.06.2022
(51) Int. Cl.: A47J 31/00, A47J 31/36, A47J 31/06, A47J 31/46, A47J 31/52, A47J 31/44

(54) **FILTER HOLDER FOR COFFEE MACHINE**
FILTERHALTER FÜR KAFFEEMASCHINE
PORTE-FILTRE POUR MACHINE À CAFÉ

(30) Priority: 22.06.2021 IT 202100016391
(43) Date of publication of application: 08.02.2023
(62) Divisional of application: 22177427.6
(73) Proprietor: SIMONELLI GROUP S.P.A., 62020 Belforte del Chienti (MC) (IT)
(72) Inventor: PARRINI, Mauro, 63821 Porto Sant'Elpidio (FM) (IT); CINGOLANI, Claudio Enrico, 62032 Camerino (MC) (IT)
(74) Representative: Baldi, Claudio

(56) References cited:
- EP-A1- 3 195 764
- EP-A1- 3 659 475
- EP-A2- 1 576 912
- US-A- 5 736 042

## Description

The present invention relates to a filter holder for an electric espresso machine equipped and conceived to also dispense American coffee.

There are differences in the preparation of espresso coffee with respect to American coffee.

Espresso coffee is prepared by pouring pressurized hot water through a compact, pressed lump of roasted, finely ground coffee in order to obtain a thick, creamy beverage in a time of about thirty seconds. Espresso coffee is served in a small cup and has a high concentration level that gives a well-defined, strong and aromatic taste.

On the other hand, American coffee, which is also known as filter coffee, is obtained by percolation, that is to say by pouring boiling water at atmospheric pressure through an appropriate amount of ground coffee contained in a filter, allowing the water to drip by gravity inside a receptacle placed under the filter.

An increasing demand for beverages made with coffee and milk has resulted in the design of an increasing number of dedicated machines in order to dispense each beverage with its features, while respecting specific preparation processes.

Evidently, the diversity of the machines and their presence in the same establishment entails not only higher purchase costs, but also problems in terms of availability and organization of the space, in view of the considerable overall dimensions of said machines. By way of example, although it can be used for the preparation of hot beverages, such as hot milk, with or without foam, or hot water for the preparation of hot drinks, such as teas or infusions, a conventional espresso coffee machine cannot be used for the preparation of American coffee (filter coffee). In fact, a conventional filter coffee machine uses hot water at atmospheric pressure, which percolates by gravity through the filter that contains uncompacted ground coffee. In contrast, in an espresso coffee machine, a pump provides for the hot water to be pressurized and conveyed into a dispensing unit wherein the filter holder is tightly engaged. The filter holder contains a dose of pressed coffee powder and the water passes through the coffee powder in a few seconds, precisely because of its high pressure, which is usually 9 bars.

Therefore, if a coffee shop wants to give customers the option of ordering both an espresso coffee and a filter coffee, two different machines, one for each type of beverage, must be provided.

EP3659475 discloses a coffee machine with a proportional pre-infusion system used to wet the coffee powder in the filter holder before the liquid coffee is dispensed.

EP3195764 (see Fig. 5) discloses a filter holder for coffee machine comprising an annular body that defines a circular seat; bayonet coupling means that protrude from the body to provide a bayonet coupling with a dispensing mouth of a dispensing unit of a coffee machine; a filter consisting in a basket disposed in said seat; said basket comprising an upper collar with cylindrical shape joined to a lower hopper with conical shape, perforated with a plurality of holes.

The purpose of the present invention is to provide a filter holder for an espresso coffee machine in such a way to also dispense American coffee.

Such a purpose has been achieved by the filter holder according to the invention, the main features of which are pointed out in the attached independent **claim 1.**

Advantageous embodiments appear from the dependent claims.

The filter holder according to the invention is intended to be used in an espresso coffee machine for the preparation of American coffee.

The coffee machine is equipped with a special water system and with a control unit that allow the hot water to flow slowly through said innovative filter holder for American coffee by simple gravity, thus implementing the percolation process at the base of the preparation of American coffee.

For the sake of explanatory clarity, the description of the filter holder according to the invention continues with reference to the attached drawings, which are shown for illustrative and non-limiting purposes only, wherein:
Fig. 1 is a schematic view of a system of a coffee machine with a filter holder for espresso coffee;
Fig. 2 is a perspective exploded view of a traditional filter holder for the preparation of espresso coffee;
Fig. 3 is a perspective exploded view of an innovative filter holder for the preparation of American coffee;
Fig. 4 is a sectional view of the filter holder of Fig. 3 in assembled condition;
Fig. 5 is a Cartesian diagram illustrating a pulse train for controlling the infusion solenoid valve of the coffee machine;
Fig. 6 is a schematic view illustrating a system of the coffee machine, with a filter holder for American coffee.

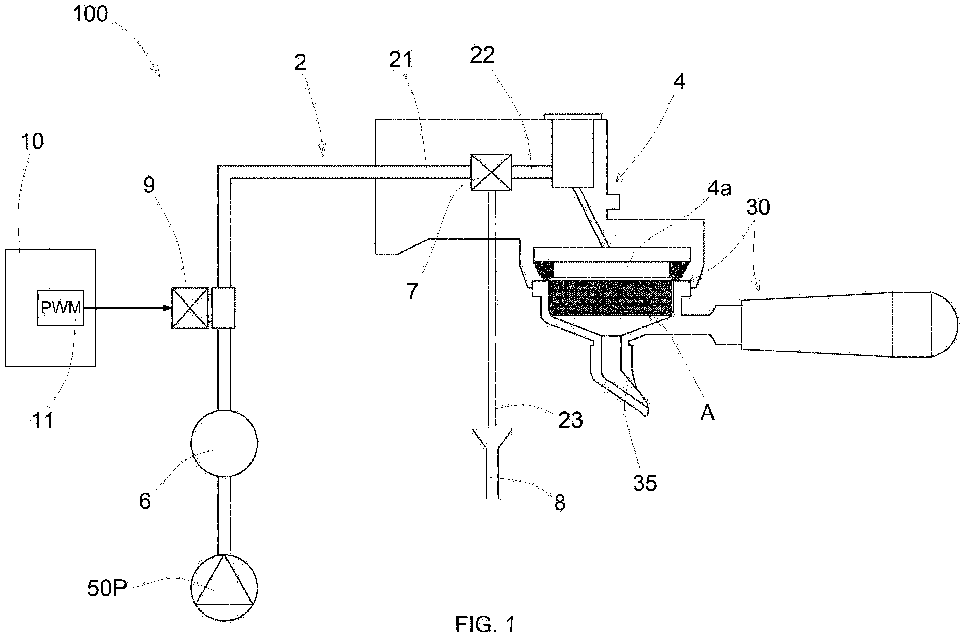

As shown in Fig. 1, the coffee machine (100) comprises:
- a water system (2) in which pressurized hot water circulates;
- at least one dispensing unit (4) fed with pressurized hot water;
- a first filter holder (30) for the preparation of espresso coffee.

The dispensing unit (4) comprises a dispensing mouth (4a) in which the first filter holder (30) is arranged.

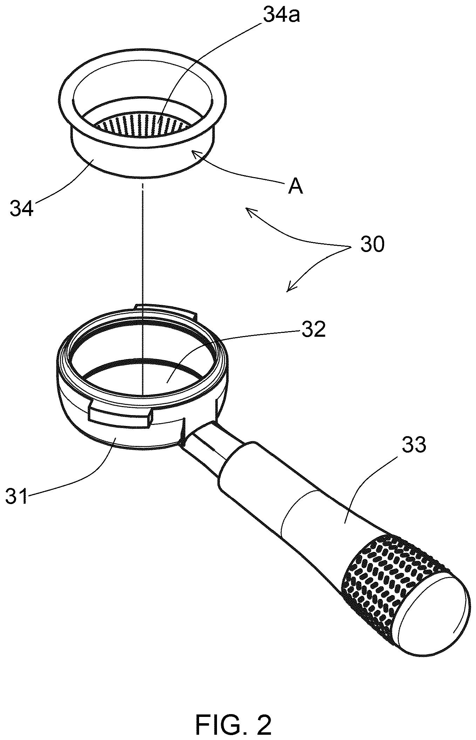

Referring to Fig. 2, the first filter holder (30) comprises a body (31) having a seat (32) with circular shape. The body (31) of the filter holder is suitable for being coupled to the dispensing mouth (4a) of the dispensing unit (4) by means of bayonet coupling means.

A handle (33) protrudes externally from the body (31) of the filter holder. The handle (33) is manually held by the operator to facilitate the repeated manual operation that is carried out to engage and disengage the filter holder (30) with/from the dispensing unit (4).

The seat (32) of the filter holder houses a first filter (A) for the preparation of espresso coffee. The first filter (A) consists of a tub (34) with circular shape, which is suitable for receiving a compact dose of coffee powder.

One or more spouts (35) protrude inferiorly from the body (31) and communicate with the seat (32) of the filter holder.

The tub (34) of the first filter has a perforated bottom wall (34a) provided with a plurality of small holes suitable for holding the ground coffee powder while allowing water to pass through, in such a way that the beverage can be poured into a cup through the spout (35).

The water system (2) comprises a pump (50P) suitable for feeding pressurized water at a pressure of approximately 9 to 11 bar, generally from a reservoir (not shown in Fig. 1).

A heater (6) is arranged in the water system (2) between the pump (50P) and the dispensing unit (4). The heater (6) is suitable for heating the water to a temperature of approximately 88-96°C, that is to say to a suitable temperature for obtaining the beverage.

A dispensing valve (7) is arranged in the dispensing unit (4) to enable or disable the delivery of water from the water system (2) to said at least one dispensing unit (4).

The dispensing valve (7) is a three-way solenoid valve and is connected to three conduits:
- an inlet conduit (21) communicating with the water system (2),
- an outlet conduit (22) communicating with said at least dispensing unit (4), and
- a drain conduit (23) communicating with a drain (8).

While the beverage is being extracted, the dispensing valve (7) opens the communication between the inlet conduit (21) and the outlet conduit (22) and closes the communication to the drain conduit (23).

Once the beverage has been extracted, the dispensing valve (7) opens the communication between the outlet conduit (22) and the drain conduit (23) and closes the communication to the inlet conduit (21).

In this way, once the beverage has been extracted, the water remaining between the dose of coffee contained in said first filter (A) and the dispensing unit (4) is drained, in such a way as to eliminate the pressure in this area of the dispensing unit and remove the first filter holder (30), without any leaks of the high-pressure water from the water system (2).

The coffee machine (100) also comprises a control unit (10) in order to program and control the operation of the coffee machine (100).

The coffee machine (100) is characterized by the fact that it is equipped with a second filter holder (50) which is specifically conceived for the preparation of American coffee.

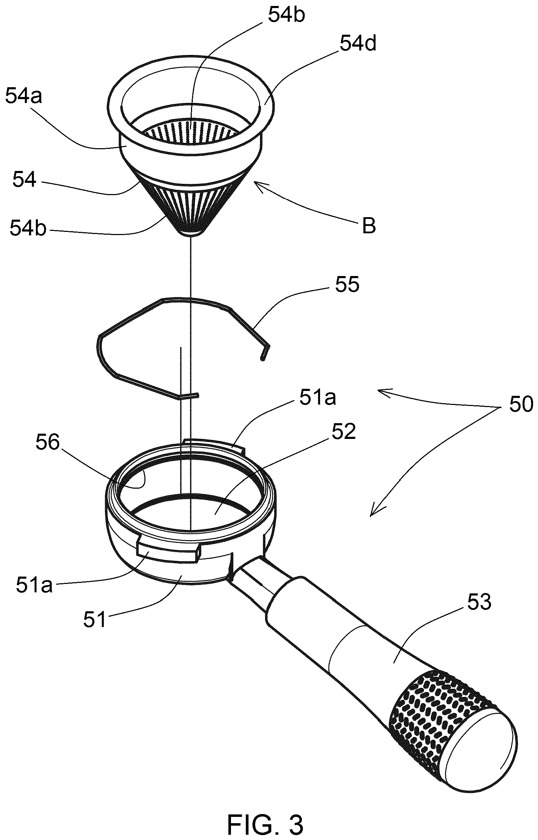

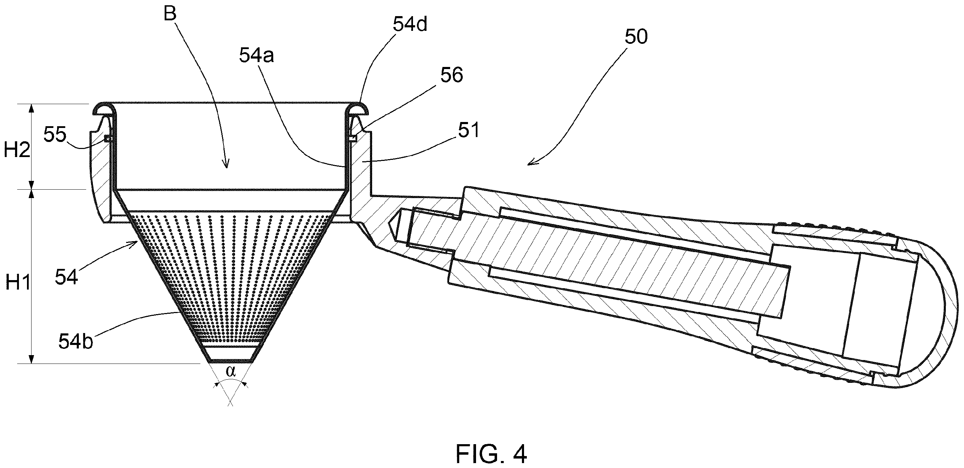

Referring to Figs. 3 and 4, the second filter holder (50) comprises an annular body (51) that defines a circular housing (52). Externally, the body (51) is dimensioned and shaped in such a way to be coupled to the dispensing mouth (4a) of the dispensing unit (4) by means of bayonet coupling means (51a).

A handle (53) protrudes externally from the body (51) of the second filter holder in order to facilitate the repeated manual operation that is carried out to engage and disengage the second filter holder (50) with/from the dispensing unit (4).

As shown in Fig. 3, the bayonet coupling means (51a) comprise two tabs that protrude radially from the body (51) of the second filter holder to provide a bayonet coupling between the second filter holder (50) and the dispensing mouth (4a) of the dispensing unit (4).

Said seat (52) of the second filter holder houses a second filter (B) for the preparation of American coffee. The second filter (B) consists of a funnel-shaped basket (54).

The basket (54) comprises an upper collar (54a) with cylindrical shape, which is joined with a lower hopper (54b) of conical shape.

Referring to Fig. 4, the lower hopper (54b) has a greater height than a height (H2) of the upper collar (54a) and a coning angle (α) lower than 90°.

Such a configuration increases the capacity of the basket (54). Indeed, it should be noted that the amount of coffee powder necessary to make an American coffee is much higher than the amount used to make an espresso coffee.

The upper collar (54a) is suitably dimensioned for being housed inside the seat (52) of the body (51) of the second filter holder. In this way, the lower hopper (54b) protrudes below the body (51) of the second filter holder. The lower hopper (54b) has perforated walls provided with a plurality of holes, as shown in Fig. 4.

Preferably, the hopper (54b) is made of two layers of filtering mesh, namely a perforated inner layer and a perforated outer layer. The inner layer of filtering mesh has smaller holes than the outer layer of filtering mesh. The holes of the inner layer preferably have a diameter of 75 µm. The holes of the outer layer preferably have a diameter of 0.3 mm.

A flange (54d) protrudes radially outwards from an opening of said upper collar (54a). The flange (54d) is rested on an edge of the annular body (51) when said second filter (B) is lowered inside the seat (52) of the second filter holder.

The seat (52) of the body of the second filter holder has an annular groove (56) to accommodate a retention spring (55) shaped like an open-ring wire. The retention spring (55) is suitable for tightening and holding the basket (54), as shown in Fig. 4.

The water system (2) and the control unit (10) let the hot water flow slowly through the second filter holder (50) for the preparation of American coffee by simple gravity, thus implementing the percolation process at the base of the preparation of American coffee.

The water system (2) is equipped with an infusion valve (9) disposed upstream the dispensing valve (7).

The infusion valve (9) is a two-way pulsing solenoid valve; otherwise said, such an infusion valve (9) has a shutter capable of opening and closing the communication between the two ways of the solenoid valve with an ON/OFF system, in a pulsed mode, with programmable opening and closing times.

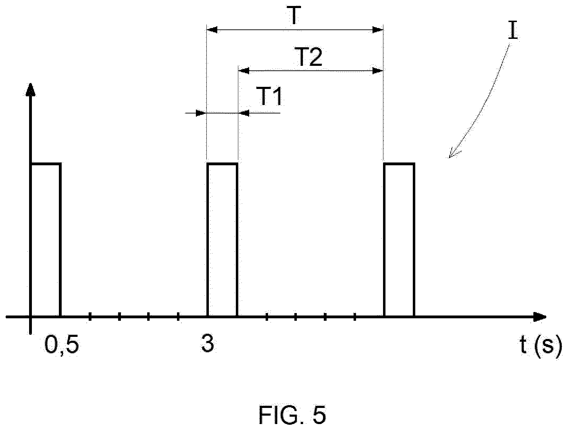

The infusion valve (9) is connected to the control unit (10), in which switching means (11) are provided to open and close the infusion valve (9) with a pulse train (I) (Fig. 5) with suitable duration and frequency in order to implement said percolation process for the preparation of American coffee.

By way of example, the switching means (11) can be a relay or a PWM (pulse-width modulation) power supply.

The intermittent opening and closing of the infusion valve (9) allows the dispensing unit (4) to be fed with a pulsating water flow rate.

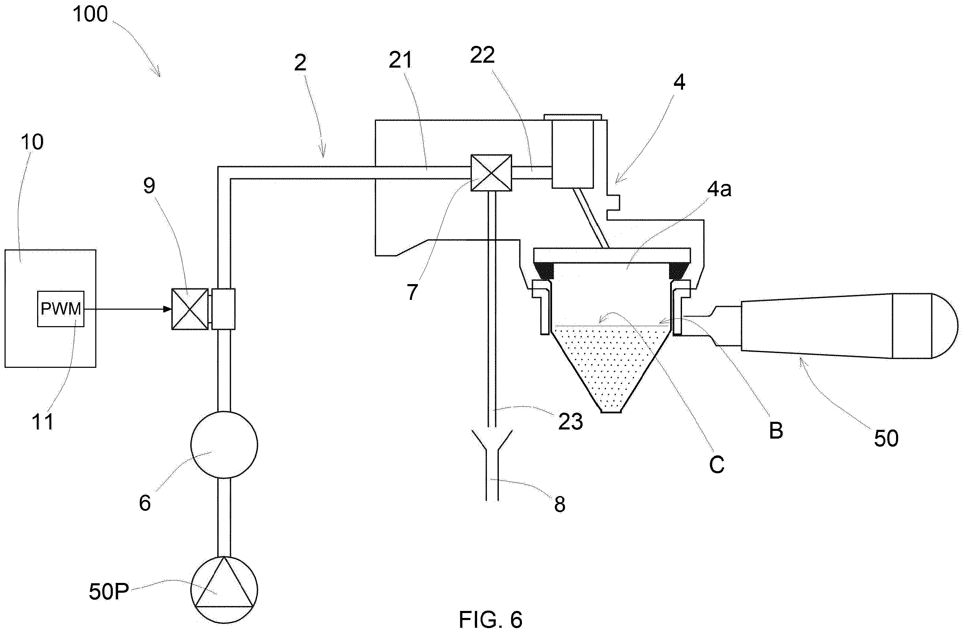

Referring to Fig. 6, when the second filter holder (50) is coupled to the dispensing unit (4), a chamber (C) is formed between the second filter (B) and the dispensing unit (4), which contains the coffee powder suitable for preparing the American coffee. Since the coffee powder is not compressed in the second filter (B), there is a volume of air between the coffee powder grains in the chamber (C).

To prevent the creation of a pressure higher than atmospheric pressure in the chamber (C), the volume of water fed into chamber (C) each time must be lower than the volume of air in the chamber (C). Such a volume of water can be adjusted according to the time in which the infusion valve (9) remains open.

When the second filter holder (50) is tightly engaged on the dispensing unit (4) and a button for dispensing American coffee is pushed, the control unit (10) imposes an operating mode on the coffee machine (100) according to which the dispensing unit (4) is fed with intermittent water jet. During the dispensing of each jet of water, the volume of water that reaches the dispensing unit (4) is not sufficient to cause an increase in pressure in the chamber (C). Therefore, the water is fed from the dispensing unit (4) to the coffee contained in the basket (54) of the second filter holder at a pressure that is basically equal to the atmospheric pressure.

The time interval between two successive jets of water must be long enough for the amount of water dispensed during a previous jet of water to percolate completely through the coffee powder contained in the basket (54) by simple gravity.

The jets of water are repeated cyclically until the desired dose of beverage has completely percolated into the cup disposed under the dispensing unit (4) wherein the second filter holder (50) is engaged.

The pulse train (I) in Fig. 5 shows pulses having a duration equal to the opening time interval (T1) in which the infusion valve is open and a distance between pulses equal to the closing time interval (T2) in which the infusion valve is closed.

The pulse train (I) comprises:
- pulses having a duration equal to the opening time interval (T1),
- a period (T = T1 + T2) equal to the sum of the opening time interval (T1) and the closing time interval (T2); and
- a frequency (f = 1/T) equal to the inverse of the period.

In this way:
- a variation in the duration of the pulse will vary the volume of water in a jet of water,
- a variation in the frequency of the pulse train (I) will vary the closing time intervals (T2) in which the dispensing valve remains closed to allow the percolation of water coming from the preceding jet of water, and
- a variation in the number of pulses will vary the total amount of dispensed beverage.

Experimentally, it was verified that the volume of air contained in the chamber (C) is greater than 3 cm³.

Therefore, the opening time interval (T1) in which the infusion valve is to remain open must be such to allow the passage of a volume of water that is lower than or equal to 3 cm³. In such a case, the opening time interval (T1) in which the infusion valve is to remain open is lower than or equal to 0.5 seconds.

A volume of water of 3 cm³ takes less than 2.5 seconds to percolate through the coffee powder contained in the second filter (B). Therefore, each closing time interval (T2) in which the infusion valve remains closed must be higher than or equal to 2.5 seconds.

In the case where a volume of 120 cm³ of American coffee is to be dispensed, it will be necessary to send 40 jets of water to the filter holder (50), each jet of water containing 3 cc of water. If the open time intervals (T1), in which the infusion valve is open, have a duration of 0.5 seconds and the closing time intervals (T2), in which the infusion valve is closed, have a duration of 2.5 seconds, 120 seconds will be required for dispensing 120 cm³ of American coffee.

It should be noted that the dispensing valve (7) remains open for the time necessary to complete the number of intermittent jets of water that are programmed in order to pour a desired dose of American coffee into the cup.

The control unit (10) also comprises a memory and programming unit in which the number of pulses of the pulse train (I), the duration of each pulse, and the frequency of the pulse train can be set.

When the first filter holder (30) is tightly engaged on the dispensing unit (4) and the button for the preparation of an espresso coffee is operated, said control unit (10) imposes an operating mode on the coffee machine (100) according to which the infusion valve (9) remains open for the entire opening time of the dispensing valve (7), whereby the dispensing unit (4) is supplied, for the entire programmed time, with a continuous flow of hot water that passes through said first filter (A) under pressure.

In order to make an espresso coffee, the following steps must be implemented:
- engaging the first filter holder (30) on a dispensing unit (4) after filling said first filter (A) with coffee powder;
- opening the dispensing valve (7);
- keeping the dispensing valve (9) open for the entire opening time of the dispensing valve (7);
- closing the dispensing valve (7) when the beverage has been dispensed.

In order to make an American coffee, the following steps must be implemented:
- engaging the second filter holder (50) on a dispensing unit (4) after filling the second filter (B) with coffee powder;
- opening the dispensing valve (7);
- opening and closing the infusion valve (9) intermittently and in such a way that the volume of water that is poured into the second filter (B) - at each opening time interval of the infusion valve (9) - is lower than the volume of air contained in the mass of coffee powder and in the chamber defined by the dispensing unit (4) and by the second filter (B), and the time interval between two successive openings of the infusion valve (9) is long enough for the amount of water dispensed during the previous opening time interval to percolate completely through the basket (54);
- closing the dispensing valve (7) when a full dose of beverage has been dispensed, that is to say, when the programmed number of opening and closing time intervals of the infusion valve (9) has been implemented.

The coffee machine (100) may comprise several dispensing units (4) and provides that at least one of said dispensing units is dedicated to the preparation of American coffee and is fed with water at a lower temperature than the other dispensing units dedicated to the preparation of espresso coffee.

In fact, it should be noted hot water at a temperature of approximately 92°C and at a pressure of usually of 9 bar is used for espresso coffee, whereas hot water at atmospheric pressure at a temperature of approximately 88°C is preferably used for American coffee.

## Claims

1. Filter holder (50) for coffee machine comprising:
- an annular body (51) that defines a circular seat (52);
- bayonet coupling means (51a) that protrude from the body to provide a bayonet coupling with a dispensing mouth (4a) of a dispensing unit (4) of a coffee machine;
- a filter (B) consisting in a basket (54) disposed in said seat (52); said basket (54) comprising an upper collar (54a) with cylindrical shape joined to a lower hopper (54b) with conical shape, perforated with a plurality of holes;
**characterized in that**
said lower hopper (54b) protrudes under the body (51); and
said lower hopper (54b) has a higher height (H1) than a height (H2) of the upper collar (54a) and a coning angle (α) lower than 90°.

2. The filter holder (50) according to claim 1, wherein said upper collar (54a) comprises a flange (54d) that protrudes radially outwards in order to be rested on an edge of the body (51) of the filter holder.

3. The filter holder (50) according to claim 1 or 2, wherein said seat (52) of the body of the filter holder has an annular groove (56) wherein a retention spring (55), which is shaped like an open-ring wire, is disposed and is suitable for tightening and holding the filter (B).

4. The filter holder (50) according to any one of the preceding claims, wherein said lower hopper (54b) comprises a filtering mesh comprising a perforated inner layer and a perforated outer layer, in which the holes of the inner layer are smaller than the holes of the outer layer.

## Patentansprüche

1. Filterhalter (50) für eine Kaffeemaschine, umfassend:
- einen ringförmigen Körper (51), der einen kreisförmigen Sitz (52) definiert;
- Bajonettkupplungsmittel (51a), die aus dem Körper vorstehen, um eine Bajonettkupplung mit einer Ausgabeöffnung (4a) einer Ausgabegruppe (4) einer Kaffeemaschine bereitzustellen;
- einen Filter (B), der aus einem Korb (54) besteht, der in dem Sitz (52) angeordnet ist; wobei der Korb (54) einen oberen Bund (54a) mit zylindrischer Form umfasst, der mit einem unteren Trichter (54b) mit konischer Form verbunden ist, der mit einer Vielzahl von Löchern perforiert ist;
**dadurch gekennzeichnet, dass**
der untere Trichter (54b) unter dem Körper (51) vorsteht; und
der untere Trichter (54b) eine Höhe (H1) aufweist, die größer ist als eine Höhe (H2) des oberen Bundes (54a), und einen Konizitätswinkel (α), der kleiner ist als 90°.

2. Filterhalter (50) nach Anspruch 1, wobei der obere Bund (54a) einen Flansch (54d) umfasst, der radial nach außen vorsteht, um auf einem Rand des Körpers (51) des Filterhalters anzuliegen.

3. Filterhalter (50) nach Anspruch 1 oder 2, wobei der Sitz (52) des Körpers des Filterhalters eine ringförmige Nut (56) aufweist, in der eine Rückhaltefeder (55) in Form eines offenen Drahtrings angeordnet ist, die dazu bestimmt ist, den Filter (B) anzuziehen und festzuhalten.

4. Filterhalter (50) nach einem der vorstehenden Ansprüche, wobei der untere Trichter (54b) ein Filtersieb umfasst, das eine gelochte Innenschicht und eine gelochte Außenschicht umfasst, wobei die Löcher der Innenschicht kleiner sind als die Löcher der Außenschicht.

## Revendications

1. Porte-filtre (50) pour machine à café comprenant :
- un corps (51) de forme annulaire qui délimite un emplacement (52) de forme circulaire ;
- des moyens d'embrayage à baïonnette (51a) qui débordent du corps pour consentir un embrayage à baïonnette avec une embouchure de distribution (4a) d'un groupe de distribution (4) d'une machine à café ;
- un filtre (B) qui consiste en un panier (54) disposé dans ledit emplacement (52) ; ledit panier (54) comprenant un collier supérieur (54a) de forme cylindrique raccordé à une trémie inférieure (54b), de forme conique, perforée d'une pluralité de petits trous ;
**caractérisé en ce que**
ladite trémie inférieure (54b) déborde au-dessous du corps (51) ; et
ladite trémie inférieure (54b) a une hauteur (H1) majeure par rapport à une hauteur (H2) du collier supérieur (54a) et un angle de conicité (α) mineur de 90°.

2. Porte-filtre (50) selon la revendication 1, où ledit collier supérieur (54a) comprend une bride (54d) qui déborde radialement vers l'extérieur pour aller en appui sur un bord du corps (51) du porte-filtre.

3. Porte-filtre (50) selon la revendication 1 ou 2, où ledit emplacement (52) du corps du porte-filtre a une gorge (56) de forme annulaire dans laquelle un ressort de retenue (55) est disposé ; ledit ressort ayant une forme de fil à anneau ouvert, préposé à serrer et à bloquer le filtre (B).

4. Porte-filtre (50) selon l'une quelconque des revendications précédentes, où ladite trémie inférieure (54b) comprend une maille filtrante comprenant une couche interne perforée et une couche externe perforée, où la couche interne a des trous plus petits par rapport à la couche externe.
